# EUROPÄISCHE PATENTANMELDUNG

(11) **EP 3 266 807 A1**
(43) Veröffentlichungstag der Anmeldung: **10.01.2018**
(21) Anmeldenummer: 16178391.5
(22) Anmeldetag: 07.07.2016
(51) Int. Cl.: C08G 65/26

(54) **VERFAHREN ZUR HERSTELLUNG VON HOCHREINEN PHENYLPOLYETHYLENGLYKOLETHERN**

(71) Anmelder: BASF SE, 67056 Ludwigshafen am Rhein (DE)
(72) Erfinder: Ernst, Martin, 69121 Heidelberg (DE); Burk, Simon, 67157 Wachenheim an der Weinstrasse (DE); Klumpe, Markus, 68163 Mannheim (DE)
(74) Vertreter: Schuck, Alexander

(57) **Zusammenfassung**

Verfahren zur Herstellung von Phenylpolyethylenglykolethern mit den Schritten:
(i)
Umsetzung von Phenol mit Ethylenoxid zu Phenoxyethanol in Gegenwart eines Katalysators,
(ii)
destillative Aufreinigung des Phenoxyethanols bis zu einem Gehalt an Nebenbestandteilen, ausgewählt aus Dihydroxyverbindungen, von < 0,1 Gew.-%,
(iii)
Zugabe eines basischen Katalysators, ausgewählt aus Oxiden, Hydroxiden und Alkoholaten von Alkalimetallen und Erdalkalimetallen,
(iv)
destillative Aufreinigung des Phenoxyethanols bis zu einem Gehalt an Nebenbestandteilen, ausgewählt aus Wasser und Alkoholen, von < 0,1 Gew.-%,
(v)
Umsetzung des Phenoxyethanols mit Ethylenoxid zu Phenylpolyethylenglykolether in Gegenwart des basischen Katalysators.

## Beschreibung

Die Erfindung betrifft ein Verfahren zur Herstellung von Phenylpolyethylenglykolethern.

Phenylpolyethylenglykolether werden durch Ethoxylierung von Phenol in Gegenwart eines basischen Katalysators hergestellt. Dabei besteht das Problem, dass in Gegenwart von Wasser Polyethylenglykol gebildet wird.

Phenylpolyethylenglykole sind nichtionische Tenside und können, wie in EP 2 886 580 beschrieben, als Bausteine für Dispergiermittel verwendet werden. Insbesondere wenn Phenylpolyethylenglykole als Seitenketten in Kammpolymere eingebaut werden, sind das Molgewicht und die Reinheit sowie die Abwesenheit von Polyethylenglykol (PEG) von Bedeutung. Bei den hohen Molgewichten von bis zu 5000 g/mol der Phenylpolyethylenglykole ist eine niedrige Polydispersität besonders kritisch und gleichzeitig besonders schwer zu kontrollieren.

GB 1,293,949 offenbart ein Verfahren zur Herstellung von Ethylenoxid-Addukten von Alkylphenolen, bei dem das Gemisch aus Alkylphenol und basischem Katalysator im Vakuum bis zu einem Wassergehalt von < 1 mol-%, bezogen auf Alkylphenol, entwässert wird, wobei sowohl das in dem Alkylphenol enthaltene Wasser als auch das durch Reaktion mit der Base gebildete Wasser entfernt wird. Anschließend wird mit Ethylenoxid mit einem Wassergehalt von < 0,01 Gew.-% ethoxiliert. In einem Beispiel wird ein Gemisch aus Nonylphenol mit einem Wassergehalt von 0,8 Gew.-% und KOH 95 min lang bei 130 bis 140°C und einem Druck von 20 mbar (15 mm Hg) bis auf einen Wassergehalt von 0,25 mol-% entwässert. Anschließend wird mit getrocknetem Ethylenoxid mit einem Wassergehalt von 0,002 Gew.-% bei 130 bis 145°C ethoxiliert.

Die Entwässerung von unsubstituiertem Phenol ist jedoch schwierig, da Phenol bereits bei 186°C siedet und daher bei der destillativen Entwässerung von Phenol in nicht unbeträchtlichem Ausmaß mit dem Wasser übergeht, wodurch mit Phenol belastete Abwässer anfallen.

Die Bildung von Polyethylenglykol bei der Ethoxylierung hat zwei Ursachen: die Gegenwart von Wasser in dem Reaktionsgemisch aus Starteralkohol, basischem Katalysator und Ethylenoxid, und die Temperatur bei der Ethoxylierung, da bei hohen Temperaturen in Gegenwart einer Base Phenolat abgespalten und Vinylpolyethylenglykole gebildet werden. Diese hydrolysieren in Gegenwart von Wasser und Säure zu Polyethylenglykol und Acetaldehyd. Das gebildete Phenolat kann wiederum mit Ethylenoxid reagieren und Ketten mit vergleichsweise geringem Molgewicht bilden, wodurch die Polydispersität steigt. Beide Einflussfaktoren müssen berücksichtigt werden, wenn ein hochreines und niedrigdisperses Phenylpolyethylenglykol erhalten werden soll.

Aufgabe der Erfindung ist es, ein Verfahren zur Herstellung von Phenylpolyethylenglykolethern bereitzustellen, die einen geringen Anteil an Nebenprodukten, insbesondere einen geringen Anteil an Polyethylenglykol, und eine sehr geringe Polydispersität aufweisen.

Gelöst wird die Aufgabe durch ein Verfahren zur Herstellung von Phenylpolyethylenglykolethern mit den Schritten:
- (i): Umsetzung von Phenol mit Ethylenoxid zu Phenoxyethanol in Gegenwart eines Katalysators,
- (ii): destillative Aufreinigung des Phenoxyethanols bis zu einem Gehalt an Nebenbestandteilen, ausgewählt aus Dihydroxyverbindungen, von < 0,1 Gew.-%,
- (iii): Zugabe eines basischen Katalysators, ausgewählt aus Oxiden, Hydroxiden und Alkoholaten von Alkalimetallen und Erdalkalimetallen,
- (iv): destillative Aufreinigung des Phenoxyethanols bis zu einem Gehalt an Nebenbestandteilen, ausgewählt aus Wasser und Alkoholen, von < 0,1 Gew.-%,
- (v): Umsetzung des Phenoxyethanols mit Ethylenoxid zu Phenylpolyethylenglykolethern in Gegenwart des basischen Katalysators.

Erfindungsgemäß wird Phenylpolyethylenglykol also in einem zweistufigen Verfahren hergestellt, wobei das Zwischenprodukt Phenoxyethanol isoliert und aufgereinigt wird, wobei Dihydroxyverbindungen auf einen Gehalt von < 0,1 Gew.-% abgereichert werden. Nach Zugabe des basischen Katalysators wird das Zwischenprodukt Phenoxyethanol erneut destillativ aufgereinigt, wobei aus dem Katalysator gebildetes oder mit dem Katalysator eingebrachtes Wasser oder aus dem Katalysator gebildete oder mit dem Katalysator eingebrachte Alkohole auf einen Gehalt von < 0,1 Gew.-% abgereichert werden. Die Destillationsschritte (ii) und (iv) sind leicht möglich, da der Siedepunkt des Zwischenproduktes Phenoxyethanol 247°C beträgt. In dem Phenoxyethanol gegebenenfalls enthaltene geringe Mengen an höheren Homologen sieden sogar bei noch höheren Temperaturen. Dadurch geht bei den Destillationsschritten (ii) und (iv) im Wesentlichen kein Phenoxyethanol mit über. Durch die Abwesenheit von Dihydroxyverbindungen, Wasser und Alkoholen bei der Ethoxilierung (v) werden Phenylpolyethylenglykolether mit sehr niedriger Polydispersität erhalten.

In einem ersten Schritt (i) wird Phenol mit Ethylenoxid in Gegenwart eines Katalysators zu Phenoxyethanol umgesetzt. Geeignete Katalysatoren sind Alkalimetallhydroxide, tertiäre Amine, Natriumphenolat und Triphenylphosphin. Bevorzugter Katalysator ist Triphenylphosphin. Die Umsetzung kann bei einem Druck von vorzugsweise 1 bis 6 bar absolut, einer Temperatur von 110 bis 130°C und vorzugsweise einem geringen Ethylenoxidüberschuss durchgeführt werden. Im Allgemeinen werden Phenol und der Katalysator in einem Rührkessel vorgelegt und bei der Reaktionstemperatur mit Ethylenoxid begast. Die Umsetzung von Phenol mit Ethylenoxid in Gegenwart von Natriumphenolat ist zum Beispiel beschrieben in B. Wojtech, "Die Kondensation von Äthylenoxid an Phenol", Die Makromolekulare Chemie, 1960, 37, 1, 1-18.

Das erhaltene Phenoxyethanol kann noch geringe Mengen an höheren Homologen des Phenoxyethanols, ausgewählt aus Phenyldiglykol und Phenyltriglykol, enthalten. Phenyldiglykol kann in Mengen von einigen Gew.-%, beispielsweise 1 bis 5 Gew.-%, Phenyltriglykol kann in Spuren, beispielsweise in Mengen von 0 bis 1 Gew.-%, enthalten sein.

In einem zweiten Schritt (ii) wird Phenoxyethanol bis zu einem Gehalt an Nebenbestandteilen, ausgewählt aus Dihydroxyverbindungen, von < 0,1 Gew.-% destillativ aufgereinigt. Bevorzugt beträgt der Gehalt an Dihydroxyverbindungen nach dem Destillationsschritt (ii) < 0,05 Gew.-%, besonders bevorzugt < 0,02 Gew.-%. Im Allgemeinen beträgt die Reinheit des Phenoxyethanols, das noch Phenyldiglykol und Phenyltriglykol enthalten kann, mindestens 99,9 Gew.-% Phenoxyethanol, Phenyldiglykol und Phenyltriglykol. Dihydroxyverbindungen, die in Schritt (ii) abgetrennt werden, sind insbesondere Diethylenglykol (DEG) und Triethylenglykol (TEG). Die Abtrennung ist wegen des hohen Siedepunktes von Phenoxyethanol sehr gut möglich.

In einem Schritt (iii) wird ein basischer Katalysator, ausgewählt aus Oxiden, Hydroxiden und Alkoholaten von Alkalimetallen und Erdalkalimetallen, zugegeben. Geeignete Hydroxide sind beispielsweise Natriumhydroxid, Kaliumhydroxid und Calciumhydroxid, vorzugsweise Kaliumhydroxid. Bevorzugte basische Katalysatoren sind die Alkoholate von Alkali- oder Erdalkalimetallen, insbesondere die Alkoholate von Natrium oder Kalium. Weiterhin bevorzugt sind Alkoholate von aliphatischen oder cycloaliphatischen Alkoholen, besonders bevorzugt von linearen oder verzweigten C₁- bis C₅-Alkanolen. Ganz besonders bevorzugt sind Methanolate und Ethanolate, insbesondere Natriummethanolat und Kaliummethanolat. Es ist ebenfalls möglich, Gemische verschiedener Katalysatoren einzusetzen.

Der Katalysator wird im Allgemeinen gelöst in Wasser oder in Alkohol oder in einem Lösemittelgemisch, das Wasser und mindestens einen Alkohol enthalten kann, eingesetzt. Dabei kann der Anteil an Wasser und Alkohol in weiten Grenzen variieren. Bevorzugt beträgt der Anteil an Wasser und/oder Alkohol am Lösemittelgemisch mindestens 10 %, besonders bevorzugt mindestens 50%, ganz besonders bevorzugt mindestens 80%. Insbesondere bevorzugt besteht das Lösemittel für den Katalysator zu mindestens 80% aus Wasser oder einem Alkohol. Bevorzugte Alkohole sind lineare oder verzweigte Alkanole, besonders bevorzugt mit einem bis fünf Kohlenstoffatomen. Ist die Base ein Alkoholat, so wird als Lösungsmittel bevorzugt der korrespondierende Alkohol verwendet. Besonders bevorzugt sind Lösungen von Natriumhydroxid oder Kaliumhydroxid in Wasser oder Lösungen von Natriummethylat in Methanol. Im Allgemeinen beträgt der Gehalt der Lösung an Base 1 bis 80 Gew.-%, bevorzugt 5 bis 70 Gew.-%, besonders bevorzugt 10 bis 60 Gew.-% und insbesondere bevorzugt 30 bis 50 Gew.-%.

In einem Schritt (iv) wird das Phenoxyethanol bis zu einem Gehalt an Nebenbestandteilen, ausgewählt aus Wasser und Alkoholen, von < 0,1 Gew.-% destillativ aufgereinigt. Im Allgemeinen wird das Phenoxyethanol, das noch Phenyldiglykol und Phenyltriglykol enthalten kann, bis zu einem Gehalt von < 0,1 Gew.-%, bevorzugt < 0,05 Gew.-%, besonders bevorzugt < 0,02 Gew.-% Wasser und/oder Alkohole aufgereinigt. Bei den Alkoholen handelt es sich um die in dem Alkoholat gebundenen sowie in dem Lösungsmittel enthaltenen Alkohole. Die Abtrennung ist wegen des hohen Siedepunktes von Phenoxyethanol sehr gut möglich.

Der Destillationsschritt (iv) erfolgt vor der Zugabe von Ethylenoxid und wird vorzugsweise bei einer Temperatur von 80 bis 145°C, besonders bevorzugt von 120 bis 135°C und einem Druck von bevorzugt 10 bis 500 mbar, besonders bevorzugt 60 bis 200 mbar, beispielswese 150 bis 170 mbar durchgeführt. In einer bevorzugten Ausführungsform wird der Destillationsschritt derart ausgeführt, dass Phenoxyethanol und basischer Katalysator bei gleichzeitiger Evakuierung unter Destillationsvakuum aufgeheizt werden. Bei Erreichen der Destillationstemperatur wird das Gemisch für eine gewisse Zeitspanne den Destillationsbedingungen unterworfen. Diese Zeitspanne kann kurz sein, zum Beispiel weniger als eine Stunde betragen. Es kann sinnvoll sein, unterschiedliche Drücke und Temperaturen nacheinander zu durchlaufen. Die Destillationstemperatur und der Druck können über einen Zeitraum konstant gehalten werden, können aber auch kontinuierlich erhöht oder verringert werden. Nach dem Destillationsschritt (iv) ist das Gemisch aus Phenylethylenglykol im Wesentlichen frei von Wasser und Alkoholen. Typischerweise enthält das Gemisch dann weniger als 1000 ppm Wasser und Alkohole, vorzugsweise weniger als 500 ppm Wasser und Alkohole und insbesondere sogar weniger als 200 ppm Wasser und Alkohole.

In einem fünften Schritt (v) wird das Phenoxyethanol mit weniger als 0,1 Gew.-% Wasser und Alkoholen und einem Reinheitsgrad von im Allgemeinen mindestens 99,9 Gew.-% Phenoxyethanol und gegebenenfalls Phenyldiglykol und Phenyltriglykol mit Ethylenoxid in Gegenwart des basischen Katalysators zu Phenylpolyethylenglykol umgesetzt.

Die Zugabe von Ethylenoxid erfolgt nach beendeter Destillation. Es wird Ethylenoxid mit einem Wassergehalt von im Allgemeinen maximal 100 ppm, bevorzugt maximal 50 ppm zudosiert. Die Zugabe von Ethylenoxid erfolgt im Allgemeinen über einen längeren Zeitraum, beispielsweise über mehrere Stunden. Die Ethoxylierung wird vorzugsweise bei einer Temperatur von maximal 150°C, besonders bevorzugt von 125 bis 145°C durchgeführt. Bei dieser Temperatur kommt es nicht in nennenswertem Ausmaß zu Eliminierungsreaktionen unter Bildung von Vinylpolyethylenglykolen. Die Reaktion wird im Allgemeinen in einem Druckreaktor durchgeführt. Der Ethylenoxid-Druck beträgt dabei im Allgemeinen 1 bis 20 bar, bevorzugt 1 bis 6 bar.

Die Ethylenoxid-Zugabe kann zwischenzeitlich unterbrochen und anschließend wieder aufgenommen werden. Nachdem die gesamte Ethylenoxidmenge zugegeben worden ist, kann das Reaktionsgemisch noch bis zur Druckkonstanz bei der Reaktionstemperatur gerührt werden, um einen möglichst vollständigen Umsatz des Ethylenoxids zu gewährleisten. Restmengen an nicht umgesetztem Ethylenoxid können durch Anlegen von Vakuum oder durch Strippen mit einem Inertgas aus dem Reaktionsgemisch entfernt werden. Der Druckreaktor wird abgekühlt und entspannt. Das Produktgemisch wird im Allgemeinen durch Zugabe einer Säure, beispielsweise Essigsäure, Phosphorsäure oder CO₂ neutralisiert. Vorteilhafterweise wird die Neutralisation bei <100°C durchgeführt, um Spaltungsreaktionen zu unterbinden.

Optional können die Phenylpolyethylenglykole entsalzt werden, z.B. durch Adsorption von Kalium und Natrium mit Magnesiumsilikat oder Ausfällen mit Phosphorsäure, Natriumpyrophosphat oder einem alternativen Fällungsmittel. Ebenso kann das Reaktionsprodukt mittels Ionentauscher entsalzt werden.

Vorzugsweise werden in Schritt (v) 10 bis 250 mol Ethylenoxid pro mol Phenoxyethanol umgesetzt.

Die erhaltenen Phenylpolyethylenglykolether weisen eine besonders niedrige Polydispersität von Mw / Mn < 1,2, bevorzugt < 1,1 auf. Der Gehalt an Polyethylenglykol liegt im Allgemeinen bei < 5 Gew.-%, bevorzugt bei < 2 Gew.-%.

Die Erfindung wird durch die nachstehenden Beispiele näher erläutert.

### Beispiele

Die Analysen mittels Hochleistungsflüssigchromatographie (HPLC) und Größenausschlusschromatographie (GPC) wurden mit den wie nachstehend näher beschriebenen Geräten und Methoden durchgeführt.

Hochleistungsflüssigchromatographie (HPLC):
Gerät: Waters Alliance 2695 Trennungsmodul
Säule: Nucleosil C18, 100 Å, 5 micron, 250 x 4,6 mm (Macherey-Nagel)
Eluens: a) Acetonitril/Wasser = 48,2/51,8 Vol-%, Elutionszeit PEG 2,65 min., Elutionszeit Phenyl-PEG 3,66 min.
   Flussrate 1,0 mL/min
Detektion: Waters Verdampfungs Lichtstreuungsdetektor (ELS) 2424
Interner Standard: Sorbitol

Größenausschlusschromatographie (GPC):
Säulen: Polymer Laboratories Ltd., Shropshire, GB
Pumpe: Merck GmbH, 64239 Darmstadt
UV Detektor: Merck GmbH, 64239 Darmstadt
RI Detektor: ERC GmbH, 93087 Alteglofsheim
Berechnungssoftware: PSS Polymer Standard Service GmbH, D-55120 Mainz, Germany Injektion: Duratec, 68799 Reilingen

Methode:
Pumpe/Flussrate: L-6200 / 1ml/min
Säulen: 4 Stück: 300 x 7.5 mm; 5µ, 2 x 500 Å, 100 Å, 50 Å, 1 analytische Schutzsäule 5µ; gemischtes Gel
Eluens: Tetrahydrofuran für die Chromatographie
Probeninjektion: Autosampler DAS 5200 (Duratec)
Pobenvolumen: 20 µl
Probenkonzentration: 1 % in interner Standardlösung
Interner Standard: Tetrahydrofuran für die Chromatographie mit 0,1 % Toluen p.A.
Detektoren: UV Detektor L 4000 (Merck/Hitachi); RI Detektor ERC 7515 B (ERC)
Kalibrierung: Polystyrol-Standards von PSS Polymer Standard Service GmbH, für Mw 580 - 59 500 g/mol.

### Beispiel 1

137 kg Monophenylethylenglykol (990 mol), das durch Destillation sorgfältig gereinigt worden war und weniger als 0,01 Gew.-% Verunreinigungen aufwies, wurden in einem Druckreaktor vorgelegt. Nach Zugabe von 6,4 kg KOH (45 % in Wasser) wurde bei 120°C unter Vakuum so lange getrocknet, bis für 5 Minuten Druckkonstanz erreicht war. Anschließend wurden bei einer Temperatur von 140 °C und einem Druck von ca. 10 bara 4855 kg (110200 mol) bis zu einer rechnerischen Molmasse von 5000 g/mol Ethylenoxid mit einem Wassergehalt von max. 40 ppm zudosiert. Die Reaktion wurde durch Zugabe von Essigsäure abgestoppt und das Produkt mittels LCC (Liquid Chromatography under Critical Conditions) auf den Gehalt an α-Phenoxy-Ω-hydroxypolyethylenglykol analysiert. Er lag bei 95,8 Gew.-%. Daneben konnten weitere Peaks detektiert werden. Der eine wurde α,Ω-Dihydroxypolyethylenglykol mit Molmassenbereich 5000-7000 g/mol zugeordnet und betrug 1,7 mol-%. Der restliche Gehalt konnte ungesättigten Verbindungen zugeordnet werden.

### Beispiel 2

137 kg Monophenylethylenglykol (990 mol), das durch Destillation sorgfältig gereinigt worden war und weniger als 0,01 Gew.-% Verunreinigungen aufwies, wurden in einem Druckreaktor vorgelegt. Nach Zugabe von 6,4 kg KOH (45 % in Wasser) wurde bei 120°C unter Vakuum solange getrocknet, bis für 5 Minuten Druckkonstanz erreicht war. Anschließend wurden bei einer Temperatur von 160°C und einem Druck von ca. 10 bara 4855 kg (110200 mol) bis zu einer rechnerischen Molmasse von 5000 g/mol Ethylenoxid mit einem Wassergehalt von max. 40 ppm zudosiert. Die Reaktion wurde durch Zugabe von Essigsäure abgestoppt und das Produkt mittels LCC auf den Gehalt an α-Phenoxy-Ω-hydroxypolyethylenglykol analysiert. Er lag bei 94,0 Gew.-%. Daneben konnten weitere Peaks detektiert werden, die nicht eindeutig zugeordnet werden konnten.

### Beispiel 3

Es wurden Phenylpolyethylenglykole bei 130 und 160°C hergestellt. In einen 1 L-Druckautoklaven mit Rührer wurden 21,9 g (0,159 mol) Monophenylethylenglykol vorgelegt, mit1 g KOH (45 %ig in Wasser, 7,8 mmol) versetzt und der Innendruck auf 49 mbar abgesenkt. Das Gemisch wurde 30 min bei 80°C im Vakuum entwässert. Dabei wurden 0,6 g Wasser abdestilliert. Nun wurde mit Stickstoff ein Druck von 2 bar eingestellt und auf 0,5 bar entspannt. Danach wurde die Innentemperatur auf 130°C erhöht und innerhalb von 7,3 h 824,6 g (18,72 mol) Ethylenoxid zudosiert. Anschließend wurde noch 2,1 h bis zur Druckkonstanz nachgerührt. Der Autoklaveninhalt wurde auf 100°C abgekühlt, entspannt, der Druck erneut auf 48 mbar abgesenkt und 30 min lang gehalten, um Spuren von Ethylenoxid zu entfernen. Danach wurde der Autoklav auf 80°C abgekühlt und mit Stickstoff auf Normaldruck eingestellt. Es wurden 0,5 g (8,3 mmol) reine
Essigsäure hinzugefügt, um das Produkt zu neutralisieren, und der Autoklav wurde entleert. Es wurden 836,8 g Produkt erhalten. Der pH-Wert einer Probe, die mit Waser auf 5 % verdünnt worden war, betrug 7,3.

Die OHZ betrug 10,5 mg KOH/g. Mittels GPC (Lösungsmittel THF) wurden Mw und Mn bestimmt. Daraus errechnete sich eine Polydispersität von 1,047.

### Beispiel 4

In einen 1 L-Druckautoklaven mit Rührer wurden 20,0 g (0,145 mol) Monophenylethylenglykol vorgelegt, mit 0,9 g KOH (45 %ig in Wasser, 7,18 mmol) versetzt und der Innendruck auf 45 mbar abgesenkt. Das Gemisch wurde 30 min bei 80°C im Vakuum entwässert. Dabei wurden 0,5 g Wasser abdestilliert. Nun wurde mit Stickstoff ein Druck von 2 bar eingestellt und auf 0,5 bar entspannt. Danach wurde die Innentemperatur auf 160°C erhöht und innerhalb von 6,3 h 754,3 g (17,12 mol) Ethylenoxid zudosiert. Anschließend wurde noch 1,7 h bis zur Druckkonstanz nachgerührt. Der Autoklaveninhalt wurde auf 100°C abgekühlt, entspannt, dann der Druck erneut auf 49 mbar abgesenkt und 30 min lang gehalten, um Spuren von Ethylenoxid zu entfernen. Danach wurde der Autoklav auf 80°C abgekühlt und mit Stickstoff auf Normaldruck eingestellt. Es wurden 0,44 g (7,5 mmol) reine Essigsäure hinzugefügt, um das Produkt zu neutralisieren, und der Autoklav wurde entleert. Es wurden 774,2 g Produkt erhalten. Der pH-Wert einer Probe, die mit Waser auf 5% verdünnt worden war, betrug 7,8.

Die OHZ betrug 11,2 mg KOH/g. Mittels GPC (THF) wurden Mw und Mn bestimmt. Daraus errechnete sich eine Polydispersität von 1,073.

## Patentansprüche

1. Verfahren zur Herstellung von Phenylpolyethylenglykolethern mit den Schritten:
(i) Umsetzung von Phenol mit Ethylenoxid zu Phenoxyethanol in Gegenwart eines Katalysators,
(ii) destillative Aufreinigung des Phenoxyethanols bis zu einem Gehalt an Nebenbestandteilen, ausgewählt aus Dihydroxyverbindungen, von < 0,1 Gew.-%,
(iii) Zugabe eines basischen Katalysators, ausgewählt aus Oxiden, Hydroxiden und Alkoholaten von Alkalimetallen und Erdalkalimetallen,
(iv) destillative Aufreinigung des Phenoxyethanols bis zu einem Gehalt an Nebenbestandteilen, ausgewählt aus Wasser und Alkoholen, von < 0,1 Gew.-%,
(v) Umsetzung des Phenoxyethanols mit Ethylenoxid zu Phenylpolyethylenglykolether in Gegenwart des basischen Katalysators.

2. Verfahren nach Anspruch 1, **dadurch gekennzeichnet, dass** das Phenoxyethanol in Schritt (iv) bis zu einem Gehalt an Nebenbestandteilen, ausgewählt aus Wasser und Alkoholen, von < 0,02 Gew.-% aufgereinigt wird.

3. Verfahren nach Anspruch 1 oder 2, **dadurch gekennzeichnet, dass** der in Schritt (iii) eingesetzte basische Katalysator ein Alkalimetallhydroxid ist.

4. Verfahren nach Anspruch 3, **dadurch gekennzeichnet, dass** der in Schritt (iii) eingesetzte basische Katalysator Kaliumhydroxid ist.

5. Verfahren nach Anspruch 1 oder 2, **dadurch gekennzeichnet, dass** der in Schritt (iii) eingesetzte Katalysator ein Alkalimetallalkoholat ist.

6. Verfahren nach Anspruch 5, **dadurch gekennzeichnet, dass** der in Schritt (iii) eingesetzte Katalysator Kaliummethanolat ist.

7. Verfahren nach einem der Ansprüche 1 bis 6, **dadurch gekennzeichnet, dass** Schritt (v) bei einer Temperatur von maximal 150°C durchgeführt wird.

8. Verfahren nach einem der Ansprüche 1 bis 7, **dadurch gekennzeichnet, dass** in Schritt (v) 10 bis 250 mol Ethylenoxid pro mol Phenoxyethanol umgesetzt werden.
